# EUROPÄISCHE PATENTSCHRIFT

(11) **EP 0 946 273 B1**
(45) Veröffentlichungstag und Bekanntmachung des Hinweises auf die Patenterteilung: **06.08.2003**
(21) Anmeldenummer: 97954398.0
(22) Anmeldetag: 13.12.1997
(51) Int. Cl.: B01F 3/04

(54) **KARBONISIERVORRICHTUNG**
CARBONATION DEVICE
DISPOSITIF DE GAZEIFICATION DE LIQUIDE

(30) Priorität: 13.12.1996 DE 29622248 U; 15.07.1997 DE 29712913 U; 15.07.1997 DE 29712912 U
(43) Veröffentlichungstag der Anmeldung: 06.10.1999
(73) Patentinhaber: DS Produkte Dieter Schwarz GmbH, 22145 Stapelfeld (DE)
(72) Erfinder: SCHWARZ, Dieter, D-23816 Bebensee (DE); SCHRAMM, Rudolf, E-07840 Sca. Eulalia (ES)
(74) Vertreter: Patentanwälte Wenzel & Kalkoff
(86) Internationale Anmeldenummer: EP9707010
(87) Internationale Veröffentlichungsnummer: WO98025485

(56) Entgegenhaltungen:
- EP-A- 0 383 495
- WO-A-94/10860

## Beschreibung

Die Erfindung betrifft eine Vorrichtung zum Karbonisieren von in einer mit einer verschließbaren im Halsbereich angeordneten Ausgießöffnung sowie einer Gaseintrittsöffnung versehenen Flasche enthaltener Flüssigkeit, mit einer Dichteinrichtung zur abdichtenden Verbindung mit der Flasche; einer mit der Dichteinrichtung in Wirkverbindung befindlichen Gaseinblaseinrichtung zum Einblasen von Gas in die Flüssigkeit; einer Einrichtung zum Halten der Flasche in einer vorbestimmten Stellung, in der sich die Gaseintrittsöffnung im Bereich der Dichteinrichtung befindet und die Gaseinblaseinrichtung mit der Flasche funktionell verbunden ist; einem die Flasche mindestens teilweise umgebenden Gehäuse zur Aufnahme mindestens der Flasche in besagter Stellung; einem von außen zugänglichen Bedienungselement zum öffnen der Gaseinblaseinrichtung; einem der Dichteinrichtung zugeordneten beweglichen Element und einem an dem Gehäuse sitzenden, mit einer Gasflasche verbindbaren Gaszufuhranschluß für in die Flasche einzublasendes Gas, sowie eine Flasche zur Verwendung in einer solchen Vorrichtung mit Ein- und Austrittsmitteln zum Ein- und Ausfüllen der Flüssigkeit sowie zum Zuführen von Rarbonisiergas.

Bei einer bekannten Vorrichtung dieser Art (EP-B1-0 172 815) wird das Gas in den Flüssigkeitsbehälter über eine am (oben sitzenden) Hals der Flasche angeordnete Ventileinrichtung von einer ebenfalls in der Vorrichtung gelagerten Gasflasche her zugeführt. Dichtung der Gasflasche und des Flüssigkeitsbehälters befinden sich in unmittelbarer Nachbarschaft im oberen Teil der Vorrichtung. Zum Einführen des Gases und zur Verteilung desselben in der Flüssigkeit nach Durchtritt durch die dichtende Ventilanordnung ist eine sich von der Dichteinrichtung abwärts erstreckende Gaseinblaseeinrichtung mit einer sich von einem Schwimmer nach unten erstreckenden Düse vorgesehen. Abgesehen von einem nicht unerheblichen technischen Aufwand, der durch die unmittelbare Verbindung der Dicht-, Durchführ- und Ventilanordnungen nebeneinander im Kopfbereich der im spitzen Winkel zueinander angeordneten Flaschen entsteht, ist die Einführung des Gases in einen Flüssigkeitsbehälter von oben stets mit Schwierigkeiten hinsichtlich einer vollständigen Vermischung des Gases mit der Flüssigkeit verbunden. Da Gas in Flüssigkeit üblicherweise aufsteigt, ist es entweder erforderlich, die Gaseinführeinrichtung bis zum Boden der Flasche durchzuziehen, was nicht unerhebliche konstruktive Schwierigkeiten zur Folge hätte, oder das Gas muß mit einem erheblichen Druck durch die Düsen eingespeist werden, ohne daß sichergestellt ist, daß es auch wirklich den Bodenbereich erlangt. Da die für die eine innige Vermengung von Gas und Flüssigkeit erforderliche langsame Gasströmung auf diese Weise nicht erreicht werden kann, erhält man in der Flasche eine mit Gas versetzte Flüssigkeit, die Qualitätsnachteile wie ungenügende Vermengung oder Haltbarkeit des Gases in der Flüssigkeit hat.

Eine Karbonisiervorrichtung, wobei die Flasche mit einer zum oberen Teil den Flasche führenden Fasleitung verseken ist, ist auch von EP O 383 495 her bekannt.

Um aufsteigenden Gasstrom zur Erzielung eines ausreichenden Mischeffektes mit der Flüssigkeit zu nutzen, ohne von oben her Gas über eine Leitung zum Gefäßboden führen zu müssen, ist eine Reihe funktionell unterschiedlicher technischer Lösungen bekanntgeworden, ohne daß diesen bis heute ein praktischer Erfolg beschieden war.

So zeigt US 5 260 081 einen Behälter zum seitlichen unteren Anschluß an eine Karbonisiervorrichtung. Die Gasleitung wird hierbei von einer Anschlußkupplung durch den Boden zu einer Gasverteilerdüse geführt. Oben im Gefäß sitzt ein Verschlußund Außgießventil. Diese Anordnung bedingt ein herstellungstechnisch sehr kompliziertes Flüssigkeitsgefäß. Das Karbonisieren erfolgt bei "Andocken" des Gefäßes an den Gaserzeuger automatisch, d.h. es kann der Begasungsvorgang nicht ohne Trennung der Verbindung beider Geräteteile unterbrochen werden, abgesehen davon, daß im Gaserzeuger über Chemikalien erst das Gas hergestellt werden muß und kein Flaschengas fertig zur Verfügung steht. Dadurch wird die Handhabung maßgeblich erschwert, was bei den relativ hohen Herstellungskosten solcher Geräte deren Absatzfähigkeit zusätzlich verringert.

Weiter ist es in diesem Zusammenhang bekannt (DE 41 415, DE 58 458, US 4 481 986), Flaschen oder ähnliche zu begasende Gefäße in umgekehrter Lage, d.h. mit Hals und Öffnung nach unten, an eine Karbonisiergasquelle anzuschließen. Für die sichere Lagerung mit dem Flaschenhals nach unten sind hier ebenso besondere konstruktive Maßnahmen erforderlich wie zur verlust- bzw. leckagefreien Entnahme aus der zwangsläufig in den Flaschenhals hineinreichenden Gaseinblaseinrichtung, die zudem hinreichend druckgesichert sein muß.

Aufgabe der Erfindung ist es demgegenüber, eine Vorrichtung und eine damit zu verwendende Flasche zu schaffen, die in Beseitigung der oben erwähnten Nachteile eine sinnvoll zu handhabende und auch in der Herstellung einfache und preiswerte Möglichkeit zum Begasen von Flüssigkeiten unter inniger Vermengung des Gases mit der Flüssigkeit bieten sowie die hierfür erforderlichen Bauteile für eine sach- und funktionsgerechte Verwirklichung dieser Aufgabe bereitstellen.

Diese Aufgabe wird bei einer Karbonisiervorrichtung der eingangs beschriebenen Art dadurch gelöst, daß die Dichteinrichtung und ein erstes Gaseinblasteil der Gaseinblaseinrichtung Bestandteile des Bodens der Flasche sind und ein zweites Gaseinblasteil der Gaseinblaseinrichtung zum Betätigen der Dichteinrichtung an dem Gehäuse angeordnet ist derart, daß erstes und zweites Gaseinblasteil relativ zueinander mittels eines von außen zugänglichen Bedienungselements zum Öffnen des Gaseintritts bewegbar sind. Vorzugsweise können dabei das erste und das zweite Gaseinblasteil Bestandteil eines Gaseintritt-Bodenventils sein, das den Durchtritt von Flüssigkeit bei jeder Position der beiden Teile sperren kann.

Bei einer Flasche der eingangs beschriebenen Art wird die Aufgabe nach dem Hauptaspekt der Erfindung dadurch gelöst, daß die Ein- und Austrittsmittel als voneinander separate, jeweils verschließbare Einfüll- und Ausgießöffnung im Bereich des Flaschenhalses und Gaseintrittsöffnung vorgesehen sind, wobei die Gaseintrittsöffnung im Flaschenboden angeordnet und mittels eines Bodenventils betätigbar sein sollte.

Mit diesen Maßnahmen lassen sich nicht nur erhebliche technische und finanzielle Vorteile gegenüber dem Stand der Technik insgesamt erzielen, sondern Handhabung und Ergebnis, d.h. angestrebtes Getränkeprodukt, sind wesentlich verbessert. So kann das Gas vom Flaschenboden her in die Flüssigkeit eingeführt werden und damit seiner natürlichen - aufsteigenden-Bewegungsrichtung in der Flüssigkeit folgen, ohne daß es irgendwelcher Konstruktionselemente bedarf, die über einen weiten Weg in die Flasche hineinragen und für Zufuhr und/oder Vermischung erforderlich wären. Auch baut sich durch das selbständige Strömen/Aufsteigen des Gases dessen Druck ab, wodurch sich insbesondere eine bessere Nutzung des unter Druck zuzuführenden Gases ergibt und Überdruckmaßnahmen konstruktiv und funktionell vereinfacht ausgestaltet werden können. Zugleich ist die Flasche primär gegen Flüssigkeit zu dichten, wodurch sich eine erheblich einfachere Bauform der entsprechenden Ventil- und Dichtanordnungen ergibt. Außerdem läßt sich auf diese Weise eine Gesamtanordnung der Vorrichtung realisieren, bei der am Boden der Flasche ein wesentlicher Teil der Ventilanordnung in paßgerechter Form vorgesehen sein kann, um ein Einsetzen der Flasche in einer auch für den Laien verständlichen, sinnfälligen Weise in Verbindung mit einem im oberen Teil der Vorrichtung angeordneten, leicht zugänglichen Bedienungselement, beispielsweise in Form einer Handhabe (Druckkopf od.dgl.), zu ermöglichen. Durch aufrechte Anordnung der Flüssigkeitsflasche wiederum kann ein Reservoir für die Gaszuführung, üblicherweise in Form einer Gasflasche vorgesehen, kompakt in Nachbarschaft zu dem Flüssigkeitsbehälter in einer Neigung angeordnet werden, die ihrerseits eine höhere Sicherheit für den Fall von Undichtigkeiten im Austrittsbereich der Gasflasche gewährleistet. Die Vorteile hinsichtlich Konstruktion und Bedienbarkeit können durch spezielle Ausführungsformen, wie sie im folgenden anhand diverser Weiterbildungen dargelegt sind, sinnvoll realisiert, ergänzt und weitergeführt werden. Durch Leiten des Gases vom Hals der Gasflasche im oberen Bereich der Vorrichtung zum Boden der Wasserflasche ergibt sich ein relativ langer Strömungsweg, der sich dämpfend auf den Gasstrom auswirken kann, so daß u.a. Strömungsstöße im Gerät vermieden werden können.

Zweckmäßig umfaßt die Vorrichtung eine Schnellkupplung zum Anschluß einer austauschbar in die Vorrichtung einsetzbaren Gasflasche an eine Gaszufuhrlei-tung .

Hinsichtlich besonders gün-stiger Einsatzmöglichkeit für die erfindungsgemäße Vorrichtung umfaßt diese in zweckmäßiger Ausgestallung ein Ventil zum Einleiten von Gas in Flüssigkeit in die Flasche, wobei zumindest ein Teil des Ventils am Boden der Flasche als Doppelfunktionsventil ausgebildet ist, wodurch sich ein multifunktioneller Einsatz ergibt. Weitere Einzelheiten der Ventilausbildung ergeben sich aus der weiter unten folgenden Beispielsbeschreibung. Als besonders zweckmäßig hat sich aber eine Ausführungsmöglichkeit herausgestellt, bei der das Ventil ein unter Kraft einer Feder die Gaseintrittsöffnung im Flaschenboden gegen Flüssigkeitsaustritt verschließendes Kugelelement sowie einen Ventildorn mit einem darin verlaufenden Gaszufuhrkanal umfaßt, wobei unter Absenken der Flasche der Dorn das Kugelelement gegen die Federkraft verdrängt. Eine solche Ausbildung ist einfach in der Herstellung und funktionssicher.

Bei einer Ausführungsform der Erfindung, bei der Gaseinblaseinrichtung und Gaszufuhranschluß über ein sich über die gesamte Gehäusehöhe erstreckendes Schaltgestänge direkt miteinander verbunden sind, hat sich herausgestellt, daß die Führung der Flasche in Verbindung mit dem Bedienungselement wie auch die Handhabung des letzteren gewisse Unzulänglichkeiten aufweisen können, wodurch die Gesamtfunktion der Vorrichtung beeinträchtigt werden kann.

Um hier Abhilfe zu schaffen und ein Bedienungselement vorzusehen, das nicht nur sicher im Gehäuse geführt ist, sondern zugleich eine einfachere Funktion der Gaszufuhr, gegebenenfalls auch in Verbindung mit einer verbesserten Entlüftung der Gasflasche, gewährleistet, kann nach einem weiteren Aspekt der Erfindung das Bedienungselement als auf den Hals der Flasche aufschraubbarer, gegen Federkraft gegen die Flasche bewegbares Betätigungsteil für die Gaseinblaseinrichtung ausgebildet sein. Durch die unmittelbare Verbindung des Bedienungselementes mit der Flasche erhält man eine erhöhte Führungs- und Handhabungsgenauigkeit.

Gleichzeitig wird hierdurch die Möglichkeit eröffnet, gemäß einer weiteren vorteilhaften Ausbildung das Bedienungselement ein darin integriertes, auf vorbestimmten Druck öffnungsfähiges Flaschenentlüftungsventil aufnehmen zu lassen. Durch dieses ist eine höhere Sicherheit bei sich in der Flasche aufbauendem Druck gewährleistet, wobei gegebenenfalls eine Ein- bzw. Verstellung entsprechend sich ändernden Verwendungsgegebenheiten sowie Druckverhältnissen ermöglicht werden kann.

Zur noch stärkeren Erhöhung der Sicherheit, u.a. aufgrund entsprechender Vorschriften von Prüfbehörden od.dgl., kann zum Zwecke der Erzielung einer doppelten Ventil- oder Überdrucksicherung das Flaschenentlüftungs- und Sicherheitsventil als doppeltwirkendes Ventil in Form eines gegen die Kraft einer Feder bewegbaren, im Normalfall dichtend gegen ein Teil des Betätigungsteils anliegenden Ventilkörpers ausgebildet sein, der eine Durchgangsbohrung aufweisen und in dieser eine gegen die Kraft einer Kugelfeder bewegbare, den Bohrungsaustritt im Normalfall verschließende Ventilkugel umfassen kann. Damit läßt sich ein Funktionsfehler des ersten Ventils durch ein zweites beseitigen, wobei man vorzugsweise die öffnungskräfte für Ventilkörper und Ventilkugel unterschiedlich und/ oder einstellbar vorsehen kann, so daß gewährleistet ist, daß beide Stufen nicht etwa gleichzeitig ansprechen, also das zweite Sicherheitsventil nur bei Ausfall des ersten arbeitet.

Im Hinblick auf die Bedienbarkeit und die auszuübende technische Funktion ist es zweckmäßig, wenn das Betätigungsteil als oberen Abschluß eine im Gehäuse gleitend geführte Kappe umfaßt, die in sich die Feder zur Erzeugung der Rückstellkraft des Betätigungsteils mindestens teilweise und nach außen abgedeckt lagert. Einerseits wird so die Handhabung des Gerätes erleichtert, andererseits werden aber gleichzeitig funktionswichtige Teile im Gehäuse einem leichten Zugang von außen entzogen. Nach einer anderen Ausführungsform kann das Bedienungselement als am Flaschenhals dichtend verschraubbares Stempelelement ausgebildet sein, wodurch erreicht wird, daß in einfacher Weise Dichtung und Bewegung der Flasche miteinander koordiniert werden. Dabei kann das Bedienungselement vorzugsweise mit einem Kolbenelement, zum Beispiel einem Rohrteil, ausgebildet sein, in dessen Wandung Entlüftungslöcher für das das Flaschenentlüftungsventil passierende Gas vorgesehen sein können. Auch hier werden also Begasung und Bewegung miteinander verknüpft, um den konstruktiven Aufwand möglichst gering zu halten.

Um sicherzustellen, daß die Zufuhr des Gases erst dann einsetzt, wenn dessen Leitung funktionsgerecht geschaltet und freigegeben ist, sieht ein weiterer Aspekt der Erfindung vor, das Bedienungselement mit Hilfe von Gestängemitteln direkt mit dem Gaszufuhranschluß derart zu verbinden, daß die Betätigung der Gaseinblaseinrichtung der Öffnung des Gaszufuhranschlusses vorläuft. Bei einer solchen Ausgestaltung können die Gestängemittel einen zwischen Bedienungselement und Gaszufuhranschluß wirksamen, im oberen Teil des Gehäuses und am Bedienungselement gelenkig gelagerten sowie an dem Gaszufuhranschluß angreifenden Schwenkhebel aufweisen. Der Vorteil besteht hier vor allem darin, daß die Öffnung des Gaszufuhranschlusses in direkter Nachbarschaft vom Bedienungselement her abgeleitet werden kann, also die Übertragungswege zum öffnen und Schließen der Gaszufuhr relativ kurz sind. Zudem ist die Bewegungskette zwischen Gaseinblaseinrichtung am Boden der Flasche und Gaszufuhranschluß am Hals der Gasflasche entkoppelt. In besonders vorteilhafter Weise kann dabei vorgesehen werden, daß der Schwenkhebel ein das Rohrteil des Bedienungselements umgreifendes Gabellagerende und zwischen diesem und seinem anderen Schwenklagerende Mittel zum Einwirken auf/Angreifen an einen/m Öffnungsstößel für ein Ventil der Gasflasche aufweist.

Zum Zwecke der erwähnten Sicherung, die das Gerät noch bedienungsfreundlicher macht und insbesondere ein Öffnen der Gasflasche nur bei eingesetzter Wasserflasche erlaubt, können zweckmäßigerweise im Bereich der Gestängemittel und des Bedienungselements Sperrmittel angeordnet sein, die auf einem ersten Teilweg des Bedienungselements die Bewegung der Gestängemittel sperren oder verriegeln und diese erst während eines zweiten Teilwegs nach Öffnen der Gaseinblaseinrichtung am Boden der Flasche freigeben. Zum Zwecke dieses Freigebens der Verriegelungs- oder Sperrposition kann bevorzugt zwischen dem unteren Bereich der Flasche und dem Sperrmittel eine Zugeinrichtung vorgesehen sein, die vorteilhaft ein Seilzug sein kann. Damit ist ein Fehlöffnen der Gasflasche praktisch ausgeschlossen und kann nur dann eintreten, wenn vorsätzlich einerseits die Gaseinblaseinrichtung im Bereich der Halterung der Flasche mit einer Hand geöffnet und andererseits mit der anderen Hand der Betätigungsknopf bedient würde.

Aus Gründen konstruktiver Einfachheit und der erforderlichen Funktionssicherheit sollten die Sperrmittel durch die Kraft einer Feder in Sperr- oder Verriegelungsposition gehalten werden. Sie können als Stift, Nocken, Nase od.dgl. auf einem translatorisch oder rotatorisch von der Zugeinrichtung bzw. dem Seilzug bewegbaren Träger vorgesehen sein.

Weitere Vorteile und Ausführungsformen oder -möglichkeiten der Erfindung gehen aus der folgenden Beschreibung der in der schematischen Zeichnung dargestellten Ausführungsbeispiele hervor. Es zeigt
- Fig. 1: eine teilweise geschnittene Ansicht einer ersten Ausführung der erfindungsgemäßen Vorrichtung in Gesamtdarstellung, d.h. mit eingesetzter Flüssigkeitsflasche und Gasflasche;
- Fig. 2: ein Detail der Bodenausbildung einer Flüssigkeitsflasche nach Fig. 1 im Schnitt;
- Fig. 3: in Explosionsdarstellung zwei Elemente einer in Fig. 1 und 2 gezeigten Bodenventilanordnung;
- Fig. 4: die in Fig. 3 gezeigten Elemente in funktionsgerechter Ruhestellung im Zusammenhang mit der Ventilanordnung als Ganzes;
- Fig. 5: einen Detailausschnitt eines Gasflaschenkopfes mit Gasentnahmeanschluß im teilweisen Schnitt;
- Fig. 6: eine nicht gekuppelte Gasanschlußkupplung mit Betätigungseinrichtung im Schnitt;
- Fig. 7: eine teilweise geschnittene Ansicht einer weiteren modifizierten Vorrichtung zum Karbonisieren mit eingesetzten Flüssigkeits- und Gasflaschen in Gesamtdarstellung und mit Bedienungselement sowie Betätigungsteil in Ausbildung im oberen Bereich des Gerätegehäuses;
- Fig. 8: eine Einzeldarstellung des erfindungsgemäßen Bedienungselements - mit Entlüftungsanordnung - zum Anbringen auf einer Wasserflasche, und zwar in teilweisem Schnitt;
- Fig. 9: eine Variante der Entlüftungsanordnung in Ausbildung als Doppelsicherheitsventil im Schnitt und montierten Zustand;
- Fig. 10: das Bauteil der Fig. 9 in Explosionsdarstellung;
- Fig. 11: eine Ausschnittdarstellung des oberen Teils des Gerätegehäuses mit Bedienungselement und Anschluß an eine Gasflasche mit Sperr- oder Verriegelungseinrichtung in Seitenansicht;
- Fig. 12: eine Draufsicht auf Fig. 11; und
- Fig. 13: eine modifizierte Bodenventilausbildung im Schnitt.

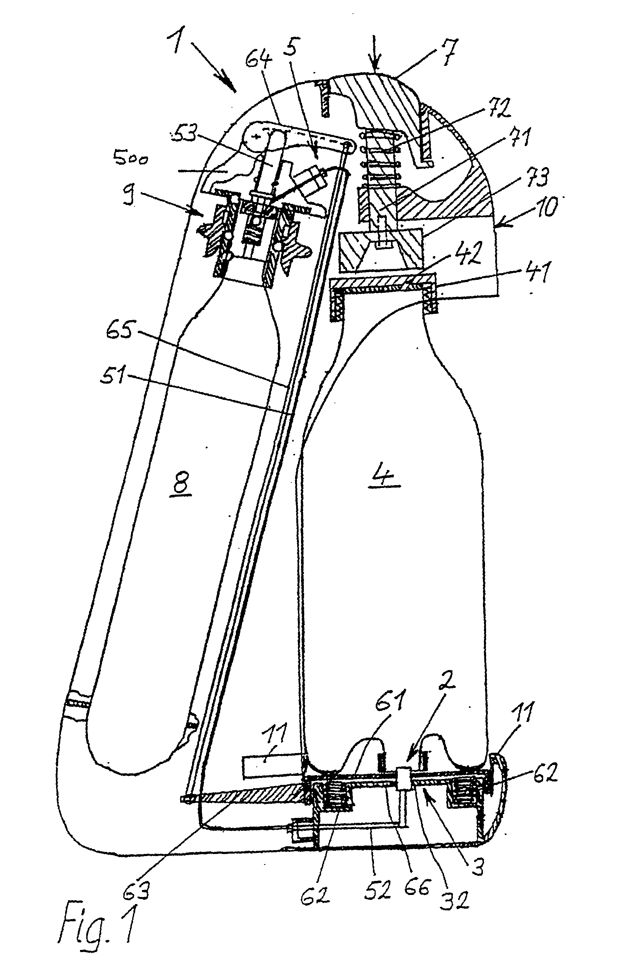

Die in Fig. 1 gezeigte Vorrichtung 1, die dem Karbonisieren von im wesentlichen gasfreien Flüssigkeiten zum Zwecke der Getränkezubereitung und -verfeinerung (Brauselimonade etc.) dient, umfaßt ein Gehäuse 10 zur Aufnahme einer Gasflasche 8 und eines Flüssigkeitsbehälters, ebenfalls in Form einer Flasche, hier mit 4 bezeichnet. Die Gasflasche 8 ist so angeordnet, daß ihre Hauptachse im spitzen Winkel zu der im wesentlichen aufrecht, d.h. vertikal stehenden Flüssigkeitsflasche 4 liegt. Das Lager für den unteren Bereich der Gasflasche 8 ist nur angedeutet und nicht mehr bezeichnet. Die Gasflasche 8 ist in dem hinteren Teil des Gehäuses 10 angeordnet, während sich die Flüssigkeitsflasche 4 in einem vorderen Teil befindet, der eine breite, die leichte Handhabung, d.h. vor allem ein schnelles Einsetzen gewährleistende Öffnung oder Ausnehmung bietet. Mit anderen Worten kann gegenüber bekannten, im Markt befindlichen Geräten auf ein Verschließen des Gehäuses mittels einer Tür verzichtet werden, da der Benutzer keinen unmittelbaren Zugang zur Gasflasche zu haben braucht, sondern die Flüssigkeitsflasche leicht von vorne her einsetzen kann, wenn einmal eine Gasflasche eingesetzt und Gas für eine Vielzahl von Befüllungsvorgängen vorhanden ist. Im übrigen ist durch diese Zuordnung der beiden Behältnisse zueinander die Voraussetzung für eine besonders formschöne, also ästhetisch ansprechende Gesamtform nach Art eines teilkonischen Küchenoder Haushaltsgerätes gegeben. So kann man, wenn man Fig. 1 sieht, an eine helmartige Anordnung mit einem offenen visier denken.

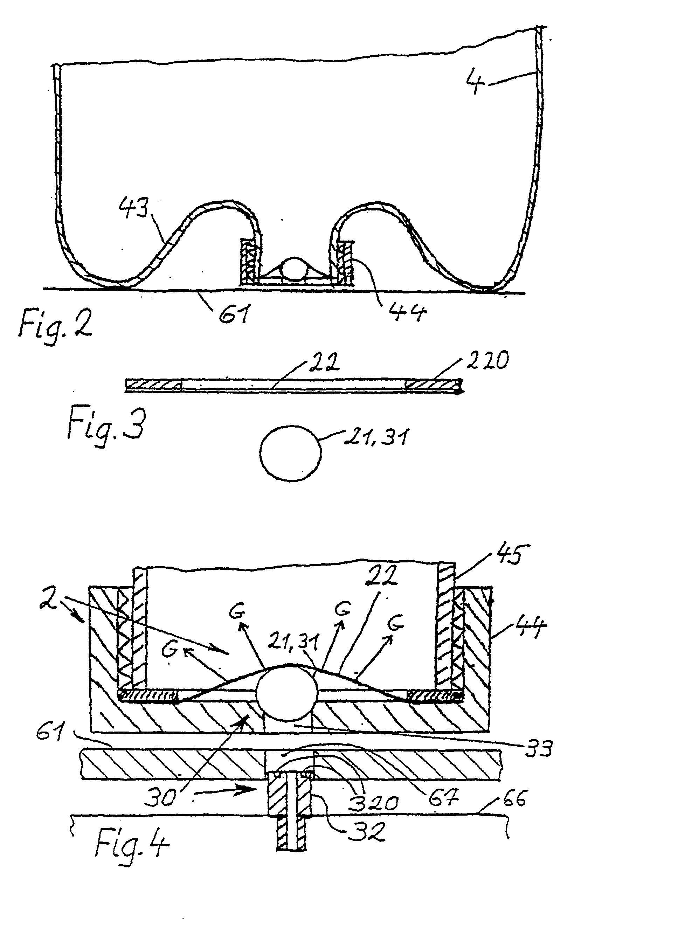

Um die in der Flasche 4 vorhandene Flüssigkeit mit einem unter Druck stehenden Gas, üblicherweise CO₂ vermengen bzw. vermischen zu können, ist die Flasche 4 in ihrem unteren Bereich mit einer Gaseinblaseinrichtung 3, die gleichzeitig einen Teil einer Dichteinrichtung 2 bildet, versehen. Letztere wiederum wird aufgebaut durch Kombination eines Kugelventils 31, 33 herkömmlichen Aufbaus, wobei nach der Erfindung die Kugel 31 mittels einer elastischen Platte 22 in ihren Sitz auf der öffnung des Gasdurchlasses 33 gedrückt wird. Diese Platte 22 ist in Fig. 3 und 4 im Detail dargestellt und Teil eines Ringes 220, an dem sie z.B. durch Kleben, Vulkanisieren o.ä. befestigt ist. Auch eine einstückige Ausbildung ist möglich. Die Platte 22 ist membranähnlich gasdurchlässig, so daß in ihrer über das in Fig. 4 gezeigte Maß hinaus aufgewölbten Position, d.h. bei angehobener Kugel 31, Gas durch sie hindurchtreten kann. Dieses erfolgt in Richtung der Pfeile G in aufgefächerter Weise, was maßgeblich zu einer guten Verteilung des Gases in der Flüssigkeit beiträgt. Die Dichteinrichtung 2 ist als Ganzes in ein Schraubgewinde eines Stutzens 45 im Flaschenboden einsetzbar, wobei eine Verschlußkappe 44, die den Gasdurchlaß 33 trägt, die Kugel 31 in ihrer Lage gegen die elastische Platte 22 hält. Der Stutzen 45 sitzt in einem Flaschenrezeß. Er ist bei stehender Flasche 4 verdeckt und bildet damit kein Hindernis.

Einzelheiten der Dicht- und der Gaseinblaseinrichtungen 2, 3 werden im folgenden ebenso näher beschrieben wie die der Aufnahme der Flasche 4 dienende Bewegungseinrichtung, die im Gehäuse 10 gelagert und in Verbindung mit letzterem so ausgebildet ist, daß sie die Flasche 4 in einer einfachen, zentrierenden Weise trägt.

Dieser Lageranordnung für den Flaschenboden 10 im Gehäuse gegenüber ist eine Auslöseeinrichtung vorgesehen, um eine eingesetzte Flasche 4 begasen zu können. Diese Vorrichtung umfaßt ein Bedienungselement 7 sowie eine Feder-Kolben-Anordnung 72, 71 mit einem Stempel 73, der auf einen Hals-Schraubverschluß 41 der Flasche, der zugleich eine feine Kalibrieröffnung 42 zum Überdruckausgleich umfaßt, unter dem erforderlichen Haltedruck aufsetzt. Ein Eindrücken des Bedienungselementes 7 führt folglich dazu, daß die Flasche 4 fest gegen ihre Auflage am Flaschenboden gedrückt wird, wobei die dadurch ausgelöste Funktion im folgenden noch näher erläutert wird. Um kleinere Flaschen als die gezeigte einsetzen zu können, kann man den Stempel 73 leicht durch ein Distanzstück verändern, d.h. verlängern.

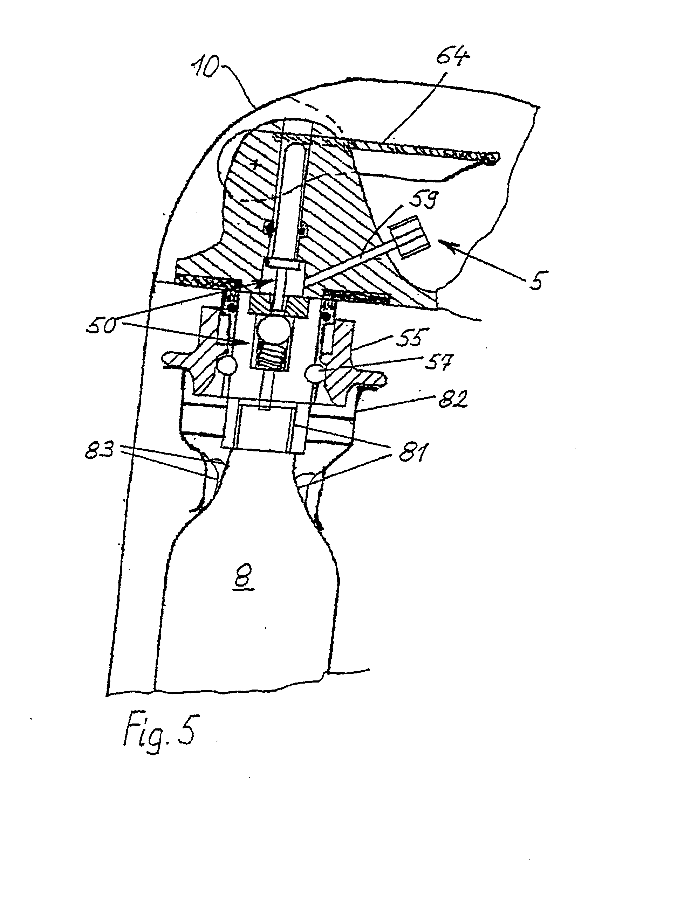

Am oberen Ende der Gasflasche 8 befindet sich ein Gaszufuhranschluß 5, der mit dem Flaschenhals mittels einer Schnellkupplung 9 unter Einführen des Flaschenhalses 81 mit der Flasche 8 verbunden werden kann (Fig.5). Der Gaszufuhranschluß 5 ist dabei fest am Gehäuse 10 vorgesehen. Von ihm erstreckt sich eine Leitung in Form eines Gasschlauches 51, Kupferrohres oder einer ähnlichen geeigneten Leitung nach unten in den Bereich des Bodenlagers für die Flasche 4, wobei hier eine feste Verbindung zu einem Gaskanal 52, der zu der vorerwähnten Gaseinblaseinrichtung 3 führt, vorgesehen ist. Dieser Gaskanal 52 endet in einem zweiten Ventilteil 32, das als Steckbuchse mit einem Gasdurchgang versehen ist, wie man dies in Fig. 4 erkennt. An der Stirnseite dieses zweiten Ventilteils 32 befinden sich radiale Austrittsschlitze 320. Bei Herabdrücken der Flasche 4 und damit Absenken der Hubplatte 61 gegen die Kraft von Federn 62 setzt die Kugel 31 auf der Oberseite der Buchse 32 auf und wird hochgedrückt. Dadurch wird der Gasdurchlaß 33 geöffnet, und das von der Gasflasche 8 über den Schlauch 51 und den Gaskanal 52 strömende Gas kann durch die Radialschlitze 320 in den Raum unterhalb der nunmehr gegenüber der Position in Fig. 4 stärker gespannten membranartigen Platte 22 gelangen. Diese kann das Gas aufgrund der oben erwähnten Gasdurchlässigkeit und Wölbung in der dargestellten fächerartigen Form durchtreten, um sich in der Flüssigkeit in der Flasche 4 zu verteilen. Um die Gasaustrittsbuchse 32 in der beschriebenen Weise mit der Kugel 31 in Wirkverbindung treten zu lassen, ist in der Hubplatte 61 ein entsprechender Durchgang 67 vorgesehen; diese Durchgangsöffnung kann gleichzeitig der Führung der Hubplatte an der Außenseite der Buchse 32 dienen.

Es sei auch noch darauf hingewiesen, daß natürlich die Flasche 4 in geeigneter Weise in dem Bodenbereich der Vorrichtung 1 bzw. des Gehäuses 10 geführt ist, wobei zu diesem Zwecke lediglich eine Aufnahme 11 (Fig. 1) angedeutet ist.

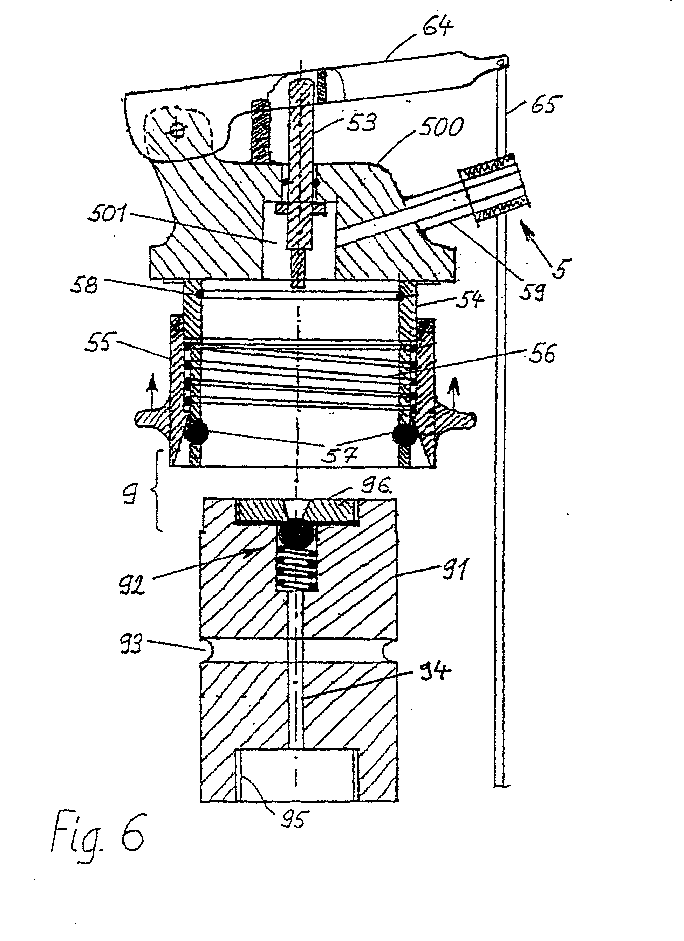

Zur Verbindung des Gasschlauches 51 mit der gemäß Fig. 1 eingesetzten Gasflasche in deren oberem Bereich ist ein am Gehäuse 10 fester Anschlußkopf 500 vorgesehen, wie dies in Fig. 1 und im größeren Detail in Fig. 6 erkennbar ist. Der Anschlußkopf 500 trägt einen seitlich schräg vorspringenden Schlauchanschlußstutzen 59, an dem der Schlauch 51 mit einer nicht näher bezeichneten Überwurfmutter befestigt werden kann. Durch die gezeigte Schräganordnung dieses Stutzens 59 wird der Vorteil erzielt, daß bei Undichtigkeit im Gasflaschenhalsbereich Gas nur seitlich entweichen und keine besondere destruktive Energie entfalten kann.

Der Kopf 500 trägt, in geeigneter Weise daran befestigt, einen Stutzen 54, der in seinem Inneren einen Dichtring 58 und im unteren Bereich als Rastelemente dienende, in entsprechenden Ausnehmungen sitzende Kugeln 57 aufweist, während auf der Außenseite des Stutzens 54, gegen die Kraft einer Schraubenfeder 56 verschiebbar, eine Überwurfhülse 55 vorgesehen ist. In den Stutzen 54 paßt ein Steckkörper 91, der bei gegen die Kraft der Feder 56 hochgeschobener Überwurfhülse 55 in den Stutzen einführbar ist. Dabei können aufgrund der Konizität des unteren Teils der Überwurfhülse 55 die Kugeln nach außen ausweichen. Der Steckkörper 91 wird, bis eine an ihm vorgesehene Ringnut 93 in den Bereich der Kugeln 57 und seine Oberkante gegen die Unterkante des Kopfes 500 gelangt sind, eingeschoben. Sodann läßt man die Überwurfhülse 55 unter der Kraft der Feder 56 zurückschnellen, wodurch die Kugeln 57 in die Nut 93 eingreifen und den Steckkörper 91 arretieren.

Der Steckkörper 91 ist, bevor er in den Stutzen 54 eingesteckt wird, auf den Hals der Gasflasche 8 mittels eines in seinem unteren Bereich angeordneten Innengewindes 95 aufgeschraubt. Er trägt in seinem Inneren ein Ventil 92 üblicher Anordnung für einen Kanal 94, durch den Gas aus der Flasche abzuziehen ist. Im oberen Bereich des Steckkörpers 91 befindet sich ein Einsatz 96 mit einer konischen, nicht näher bezeichneten Gasöffnung, die in Ruhestellung von der Ventilkugel unter Kraft der angedeuteten Feder verschlossen ist.

Um bei eingesetztem Steckkörper 91 das Ventil 92 öffnen zu können, befindet sich im Anschlußkopf 500 ein Stößel 53, der in vertikaler Richtung bewegbar ist und mit seinem unteren, verjüngten Teil durch den konischen Gasaustritt im Einsatz 96 auf die Kugel einwirken kann.

Der Stößel 53 ist mittels eines einseitig schwenkbar gelagerten ersten Hebelarms 64 bewegbar. Eine nicht näher bezeichnete Wegbegrenzung zwischen Lager und Stößel sorgt dafür, daß exakt die erforderlichen Bewegungswege für den Stößel 53 eingehalten werden können.

An das freie Ende des ersten Hebelarms 64 ist, wie in Fig. 1 erkennbar, eine Zugstange 65 angelenkt. Diese ist an ihrem unteren Ende an einen zweiten Hebelarm 63 angelenkt, der seinerseits an der Bewegungseinrichtung, nämlich an der Hubplatte 61 befestigt ist. Wird diese Hubplatte 61 durch Herabdrücken der Flasche 4 mittels des Bedienungselementes 7 abgesenkt, so wird die Zugstange 65 über den zweiten Hebelarm 63 nach unten gezogen. Der erste Hebelarm 64 bewegt sich um seinen Lagerpunkt im Uhrzeigersinn. Dadurch drückt er auf den Stößel 53, der seinerseits die Kugel des Ventils nach unten verdrängt. Nunmehr kann das Gas durch den Kanal 94, den Einsatz 96, einen im unteren Bereich des Kopfes 500 gebildeten Gasverteilraum 501 und den Schlauchanschluß 59 in den Gasschlauch 51 gelangen. Da zugleich die Flasche 4 abgesenkt ist, ist auch, wie man bei Heranziehen der Fig. 4 feststellen kann, durch Anheben der Kugel 31 der Eintritt des Gases durch den Kanal der Buchse 32 in den Wölbungsraum unterhalb der elastischen Platte 22 und folglich in die Flüssigkeit in der Flasche 4 freigegeben bzw. gewährleistet.

Um das Einsetzen der Gasflasche 8 mittels der Kupplung 9 zu erleichtern, ist auf das obere Ende der Gasflasche eine Montagehülse 82 aus geeignetem Plastikmaterial aufgesetzt (s. Fig. 5). Diese dient auch als Schutzkappe für den auf den Flaschenhals aufgeschraubten Steckkörper 91, so daß zum Beispiel bei Umfallen dieser nicht beschädigt werden kann. Man erkennt, daß bei Heranführen des Oberteils der Flasche 8 mit dieser zentrierend wirkenden Montagehilfe 82 deren Oberrand gegen einen ringförmigen Ansatz oder Flansch an der Überwurfhülse 55 drückt und somit die Funktion des Hochdrückens der Hülse 55 zwecks Einführens des Steckkörpers 91 in den Stutzen 54 übernimmt. Eine solche Montagehilfe ist ein preiswert herstellbares Teil. Es kann mit Sollbruchstellen 83 vorgefertigt werden, um spätestens dann, wenn die Rast- oder Arretierungsposition des Steckkörpers 91 gegenüber dem Stutzen 54 erreicht ist, zerstört zu werden.

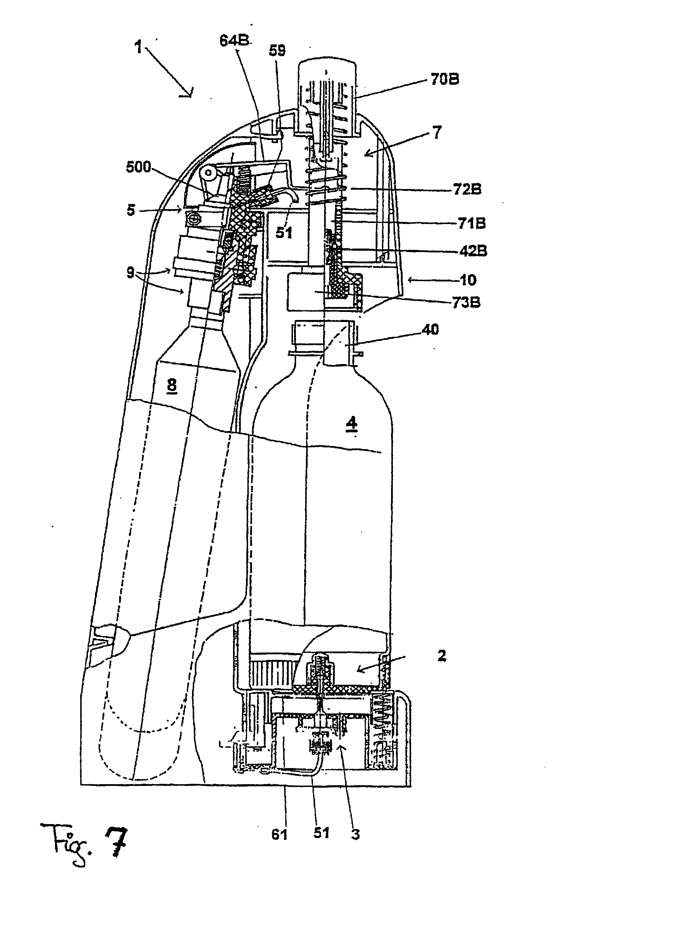

Die in Fig. 7 gezeigte Gesamtdarstellung spiegelt eine andere modifizierte Karbonisiervorrichtung wider, bei der ebenfalls gleiche Teile wie sie im Zusammenhang mit Fig. 1 beschrieben sind, gleiche Bezugszeichen aufweisen und hier nicht erneut erläutert zu werden brauchen.

Diese Vorrichtung umfaßt ein Bedienungselement 7 sowie eine Feder-Kolben-Anordnung 72B, 71B, die auf den Hals 40 der Flasche 4 dichtend aufschraubbar ist. Die Anordnung versteht sich aus der Zeichnung praktisch von selbst. Mit anderen Worten führt ein Eindrücken des Bedienungselementes 7 dazu, daß die Flasche 4 fest mit dem Flaschenboden gegen ihre Auflage auf der Lagerfläche 61 gedrückt wird.

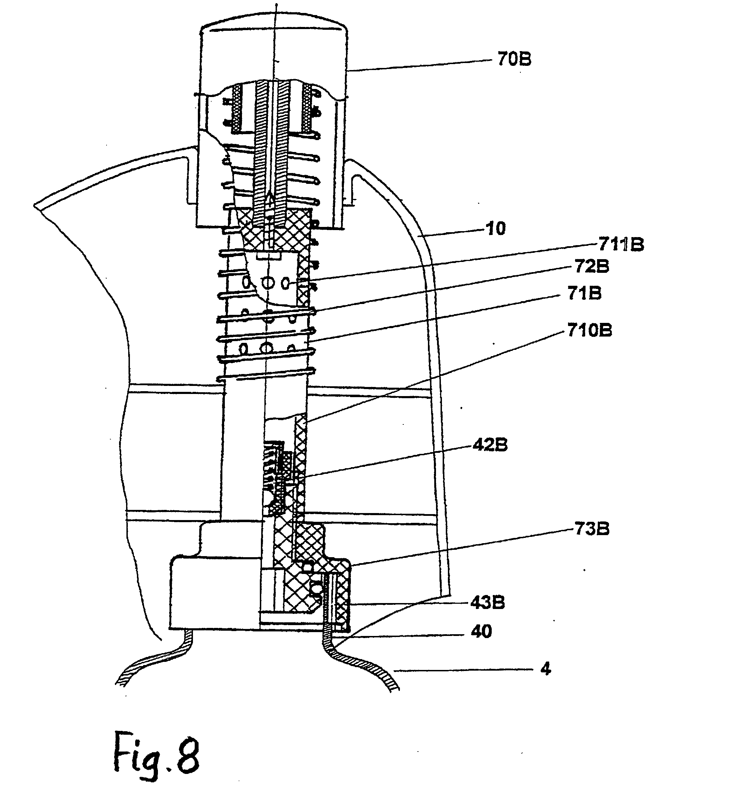

Wie aus Fig. 7 erkennbar, ist das Bedienungselement 7 nach Art eines in dem Gehäuse 10 geführten Stößels ausgebildet. An einem in der Kappe gelagerten Zapfen ist ein Kolbenelement in Form eines Rohrteils 71B befestigt. Zwischen Kappe 70B und Kolbenelement 71B ist eine Feder 72B angeordnet, gegen deren Kraft die Kappe eingedrückt werden kann, um das Kolbenelement nach unten zu drücken. Am unteren Ende des Kolbenelements befindet sich ein Stempelelement 73B, das als Schraubteil ausgebildet ist, um mit Hilfe eines in ihm angeordneten Innengewindes 43B mit dem Hals 40 der Flasche 4 verschraubt zu werden. Diese Konstruktion ist in größerem Detail in Fig. 8 erkennbar. Hieraus geht vor allem auch hervor, daß: sich im Inneren des unteren Bereiches des Rohrteils 71B ein Flaschenentlüftungsventil 42B befindet. Dieses ist in herkömmlicher Weise als unter Kraft einer Feder arbeitendes Kugel-Rückschlagventil ausgebildet. Bei der gezeigten aufgeschraubten Position des Bedienungselements 7 kann, wenn sich im Inneren der Flasche 4 ein zu hoher Druck aufbaut, dieser durch das Entlüftungsventil nach oben entweichen, wobei ein Austritt über in der Wandung 710B des Rohrteils angeordnete Entlüftungslöcher 711B erfolgen kann.

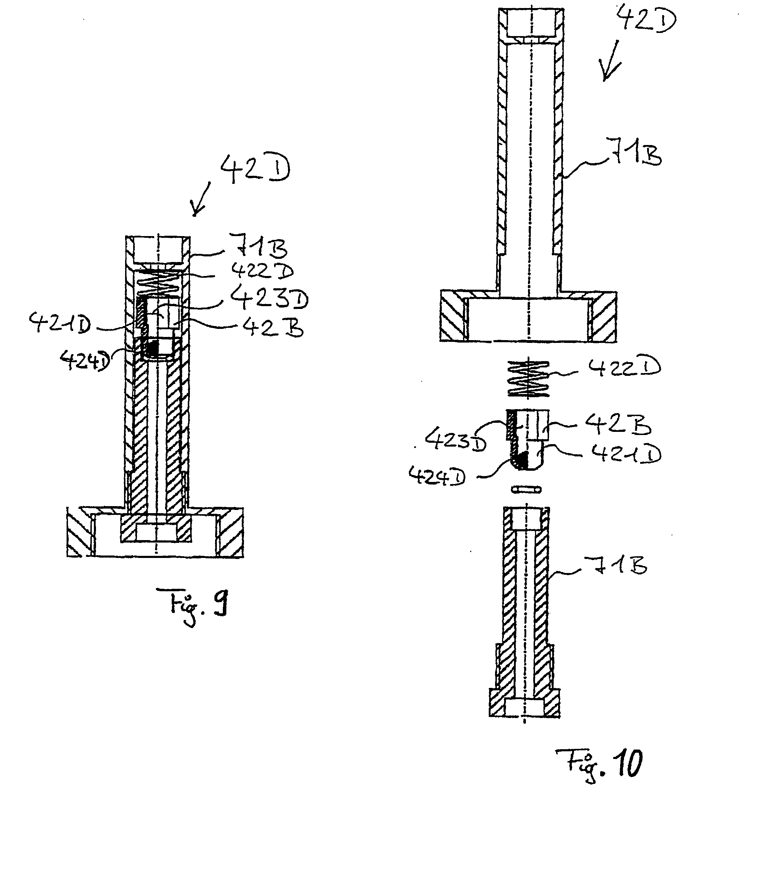

Eine Variante dazu zeigen Fig. 9 und 10. Hier ist das Ventil 42B der Fig. 8 als doppelwirkendes Sicherheitsventil 42D ausgebildet. Ein Ventilkörper 421D innerhalb des Rohrteils 71B ist von einer Feder 422D beaufschlagt. Er hat eine Durchgangsbohrung 423D, in der sich eine Ventilkugel 424D befindet. Diese wird von einer nicht gezeigten Kugelfeder in ihren Sitz am unteren Ende des Ventilkörpers 421D gedrückt. Die Federkräfte können unterschiedlich und ggf. einstellbar sein.

Wie erkennbar, ist das Bedienungselement 7 einerseits drehbar, um das Aufschrauben auf den Hals 40 der Flasche 4 zu gewährleisten, und andererseits längsverschiebbar, um die im folgenden zu beschreibende Arbeitsfunktion der Vorrichtung auszulösen.

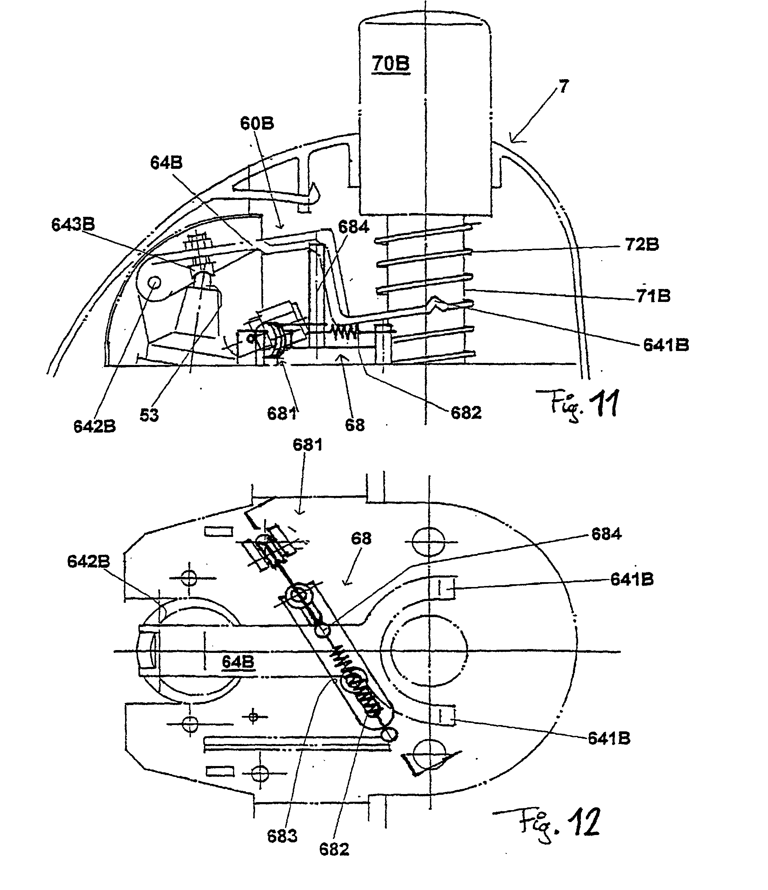

Zu diesem Zweck sind zwischen dem Bedienungselement 7 und dem Gaszufuhranschluß 5 Gestängemittel 60B in Form eines Schwenkhebels 64B vorgesehen (Fig. 11 und 12). Dieser Schwenkhebel ist in der Nachbarschaft des oberen Teils der Gasflasche 8 bei 642B in einem Schwenklagerende 642B gelagert. An dem Schwenkhebel 64B befindet sich innerhalb des Schwenklagers 642B ein Arbeitsstempel 643B, der durch Angreifen an einem Öffnungsstößel 53 auf das im oberen Teil der Gasflasche 8 angeordnete, nur aus Fig. 7 erkennbare Gasflaschenventil einwirken kann, wenn der Schwenkhebel 64B im Uhrzeigersinn bewegt wird. Nach einer geeigneten Kröpfung setzt sich der Schwenkhebel 64B in ein dem Schwenklagerende 642B gegenüberliegendes Gabellagerende 641B fort, das das Rohrteil 71B des Bedienungselements 7 umgreift und mit seinen Gabelenden im Bereich der Kappe liegt derart, daß die eingedrückte Kappe auf die hier erkennbaren Erhebungen drückt und damit den Schwenkhebel 64B im Uhrzeigersinn schwenken kann.

Um ein frühzeitiges öffnen der Gaszufuhr durch Eindrücken des Stößels 53 zu verhindern, sind im Bereich und unterhalb des Schwenkhebels 64B, also der das Bedienungselement 7 direkt mit dem Gaszufuhranschluß 5 verbindenden Gestängemittel 60B Sperrmittel 68 angeordnet. Diese gewährleisten, daß erst nach genügender Eindrückbewegung der Kappe 70B und damit des Rohrteils 71B ein Öffnen des Gaszufuhranschlusses 5 möglich wird, indem nämlich, und zwar nur bei eingesetzter Flüssigkeitsflasche 4, ein genügender Flaschenweg nach unten zurückgelegt wird, um die Gaseinblaseinrichtung 3 mit ihrer Dichteinrichtung 2 zu öffnen. Um dann die Sperrmittel 68 entriegeln zu können, ist eine Zugeinrichtung 681 in Form eines Seilzuges angeordnet, dessen Seil im unteren Teil mit dem abwärtsbewegbaren Lagerboden 61B für die Flasche 4 verbunden ist, so daß gegen die Kraft einer Feder 682 (Fig. 12) ein Träger 683 für einen Riegelstift 684 in eine Position gezogen wird, in der dieser Stift 684 unter dem Schwenkhebel 64B hervortritt und dessen Absenken im Uhrzeigersinn freigibt, um den Stößel 53 nach unten zu drücken und den Gasfluß freizusetzen.

Es versteht sich von selbst, daß beim Schließen der Vorrichtung die Hand der Bedienungsperson die Kappe 70B freigibt und diese durch die Kraft der Feder 72B nach oben gedrückt wird, so daß das Gabelende 641B des Schwenkhebels 64B von der Kappe 70B entlastet wird. Die Feder 682 zieht dann den Stift 684 mit Hilfe des Trägers 683 wieder unter den Hebel 64B, der durch den Druck des Stößels 53 und durch eine in Fig. 7 nur angedeutete Schraubenfeder entgegen dem Uhrzeigersinn zurückbewegt wird.

Statt des hier gezeigten translatorischen Trägers 683 ist es natürlich auch möglich, eine drehbare Trägerscheibe zu verwenden, an der tangential der Seilzug angreift. Dieser dreht einen Nocken, der sich in Verriegelungsposition am Schwenkhebel 64B befindet, aus diesem Bereich heraus.

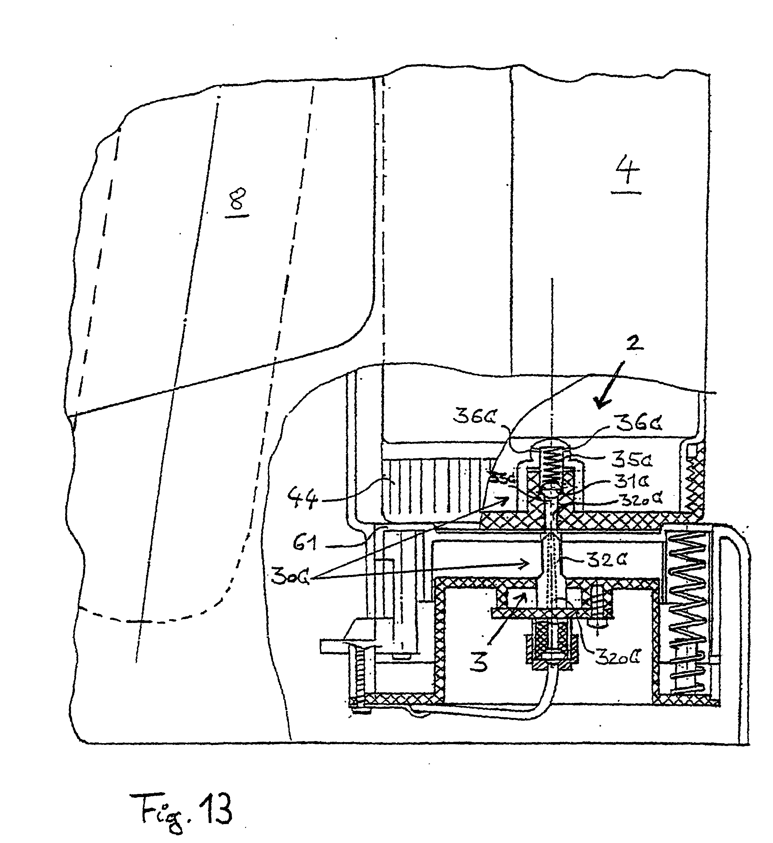

Das in Fig. 13 gezeigte, gegenüber Fig. 1 bis 4 modifizierte Bodenventil arbeitet ohne Membran und weist statt dessen
- und in vereinfachter Konstruktion - eine Kugelventilausbildung 30C auf. Dabei verschließt ein Kugelelement 31C eine Gaseintrittsöffnung 33C im Flaschenboden, und zwar unter dem Druck einer Feder 35C. Bei Gaszufuhr, d.h. bei Herunterdrükken der Flasche 4 über das Bedienungselement 7, verdrängt ein Ventildorn 32C das Kugelelement 31C aus seinem Sitz. Durch einen Gaszufuhrkanal 320C, der sich auch im Dorn 32C befindet, kann Gas an der Kugel und Feder vorbei über Verteildüsen 36C in das Innere der Flasche 4 gelangen.

Es versteht sich von selbst, daß alle Teile den Hygieneanforderungen entsprechend konstruiert, strukturiert und angeordnet werden, so daß sie auch, sofern erforderlich, einen leichten Austausch ermöglichen, während irgendwelche Hinterschneidungen, die normalerweise Schmutzfänger sind, vermieden werden sollen. Natürlich wird auch ein hinreichender Zugang zu Reinigungszwecken gewährleistet, wie man dies z.B. bezüglich der leicht demontierbaren Anordnung der Gaseinblas-/ Dichteinrichtung erkennt.

Wie ferner aus der Zeichnung erkennbar, kann das Gehäuse aus transparentem, widerstandsfähigem Kunststoffmaterial hergestellt sein, um u.a. optisch vorteilhafte Effekte zu erzeugen.

## Patentansprüche

1. Vorrichtung (1) zum Karbonisieren von in einer mit einer verschließbaren, im Halsbereich (40) angeordneten Ausgießöffnung sowie einer Gaseintrittsöffnung (33) versehenen Flasche (4) enthaltener Flüssigkeit, mit
- einer Dichteinrichtung (2) zur abdichtenden Verbindung mit der Flasche (4),
- einer mit der Dichteinrichtung (2) in Wirkverbindung befindlichen Gaseinblaseinrichtung (3) zum Einblasen von Gas in die Flüssigkeit,
- einer Einrichtung zum Halten der Flasche (4) in einer vorbestimmten Stellung, in der sich die Gaseintrittsöffnung (33) der Flasche (4) im Bereich der Dichteinrichtung (2) befindet und die Gaseinblaseinrichtung (3) mit der Flasche (4) funktionell verbunden ist,
- einem die Flasche (4) mindestens teilweise umgebenden Gehäuse (10) zur Aufnahme mindestens der Flasche (4) in besagter Stellung,
- einem von außen zugänglichen Bedienungselement (7) zum öffnen der Gaseinblaseinrichtung (3),
- einem der Dichteinrichtung (2) zugeordneten beweglichen dichtenden Element (21) und
- einem an dem Gehäuse (10) sitzenden, mit einer Gasflasche (8) verbindbaren Gaszufuhranschluß (5) für in die Flasche (4) einzublasendes Gas,
wobei
- die Dichteinrichtung (2) und ein erstes Gaseinblasteil (31) der Gaseinblaseinrichtung (3) Bestandteile des Bodens (43) der Flasche (4) sind
- und ein zweites Gaseinblasteil (32) der Gaseinblaseinrichtung (3) zum Betätigen der Dichteinrichtung (2) an dem Gehäuse (10) angeordnet ist derart, daß erstes und zweites Gaseinblasteil (31, 32) relativ zueinander mittels eines von außen zugänglichen Bedienungselements (7) zum öffnen des Gaseintritts bewegbar sind.

2. Vorrichtung nach Anspruch 1, **dadurch gekennzeichnet,daß** das erste Gaseinblasteil (31) und das zweite Gaseinblasteil (32) Bestandteil eines Gaseintritt-Bodenventils (30) sind, das den Durchtritt von Flüssigkeit bei jeder Position der beiden Gaseinblasteile (31, 32) sperrt.

3. Vorrichtung nach Anspruch 1 oder 2, **dadurch gekennzeichnet,daß** das erste und das zweite Gaseinblas- bzw. Ventilteil (31 bzw. 32) mittels einer an dem Gehäuse (10) angeordneten Bewegungseinrichtung relativ zueinander bewegbar sind, die eine einen Sitz für die Flasche (4) bildende Lagerfläche (61) und ein das zweite Gaseinblas- bzw. Ventilteil (32) lagerndes Lagerelement (66) aufweist, wobei die Lagerfläche (61) und das Lagerelement (66) durch federnde Nachgiebigkeit relativ zueinander bewegbar sind und bei mittels des Bedienungselements (7) ausgeübter Kraft das zweite Gaseinblas- bzw. Ventilteil (32) der Gaseinblaseinrichtung (3) in die zugeordnete, am Flaschenboden vorgesehene Gaseintrittsöffnung (33) des Ventils (30) derart eingreift, daß während dieses Eingriffes durch Verdrängen des ersten Gaseinblas- bzw. Ventilteils (31) im Flaschenboden (43) die öffnung (33) zum Gasdurchtritt durch den Boden frei gegeben wird.

4. Vorrichtung nach Anspruch 3, **dadurch gekennzeichnet,daß** das das zweite Gaseinblas- bzw. Ventilteil (32) lagernde Lagerelement (66) Bestandteil eines gehäusefesten Sockels ist und die Lagerfläche (61) als an dem Flaschenboden (43) angreifende, an dem Sockel gegen die federnde Nachgiebigkeit bewegbar gelagerte Hubplatte vorgesehen ist, wobei die Hubplatte mit einer Durchgangsöffnung (67) zum Durchtritt des zweiten Gaseinblas- bzw. Ventilteils (32) versehen ist.

5. Vorrichtung nach einem der Ansprüche 1 bis 4, **dadurch gekennzeichnet, daß** das Bedienungselement (7) über einem Aufnahmeraum für die Flasche (4) an dem Gehäuse (10) angeordnet und mit einem Kolbenelement (71) verbunden ist, mit dem die in die Vorrichtung (1) eingesetzte, federnd nachgiebig gelagerte Flasche (4) zum öffnen des Gaseintrittes gegen die federnde Kraft absenkbar ist.

6. Vorrichtung nach einem der Ansprüche 2 bis 5, **dadurch gekennzeichnet, daß** die das erste und das zweite Gaseinblas- bzw. Ventilteil (31, 32) relativ zueinander verstellende Bewegungseinrichtung mit einem in dem Gehäuse (10) angeordneten Gasanschlußventil (50), das für den Anschluß (5) einer mit dem ersten Gaseinblas- bzw. Ventilteil (31) des Bodenventils (30) verbundenen Gasleitung (51, 52) vorgesehen ist, zur gemeinsamen Betätigung mit dem Bodenventil (30) wirkverbunden ist, wobei die Wirkverbindung derart ist, daß das Gasanschlußventil (50) in der Offenstellung des Bodenventils (30) geöffnet, während es in der Gasschließstellung des Bodenventils (30) geschlossen ist.

7. Vorrichtung nach Anspruch 6, **dadurch gekennzeichnet, daß** der Gaszufuhranschluß (5) im oberen Bereich des Gehäuses (10) vorgesehen ist und daß das Gasanschlußventil (50) und das Bodenventil (30) mittels einer Betätigungsstange (65) wirkverbunden sind derart, daß der untere Teil der Stange an der Bewegungseinrichtung angelenkt ist, während ihr oberer Teil über einen Hebel (64) auf ein Schließteil (53) des Gasanschlußventils (50) einwirkt.

8. Vorrichtung (1) nach einem der Ausprüche 1 bis 7,
**dadurch gekennzeichnet, daß** der Gaszufuhranschluß (5) eine Schnellkupplung (9) zum Anschluß einer austauschbar in die Vorrichtung (1) einsetzbaren Gasflasche (8) umfaßt.

9. Vorrichtung (1) nach einem des Ansprüche 1 bis 8, **dadurch gekennzeichnet, daß** das die Vorrichtung ein Ventil (30) zum Einleiten von Gas in die Flasche (4) umfaßt, um darin eingefüllte Flüssigkeit mit diesem Gas zu versetzen, wobei zumindest ein Teil des Ventils (30) am Boden (43) der Flasche (4) als Doppelfunktionsventil ausgebildet ist.

10. Vorrichtung nach Anspruch 9, **dadurch gekennzeichnet,daß** das Ventil (30) einerseits den Austritt von Flüssigkeit aus der Flasche (4) sperrt sowie andererseits den Gaseintritt zum einen in einer ersten Position eines ersten Ventilteils (21, 31) einer sperrenden Dichteinrichtung (2) sperrt und zum anderen in einer zweiten Position des ersten Ventilteils (21, 31) den Gaseintritt in die Flasche (4) freigibt, wobei dem am Flaschenboden (43) ausgebildeten Ventil (30) ein zweites Ventilteil (32) zugeordnet ist, mit dem das erste Ventilteil (21, 31) aus der ersten Position in die zweite Position verdrängbar ist.

11. Vorrichtung nach Anspruch 9 oder 10, **dadurch gekennzeichnet, daß** das Ventil ein am Flaschenboden (43) angeordnetes drittes Ventilteil (22) umfaßt, das durch ein elastisches Element gebildet ist, das das erste Ventilteil (21, 31) gegen elastische Rückstellkraft in der ersten Position hält, wobei das erste Ventilteil (21, 31) gegen das dritte Ventilteil (22) gespannt gehalten ist, während das dritte Ventilteil (22) als für Gas durchlässiges Membranelement ausgebildet ist.

12. Vorrichtung nach Anspruch 11, **dadurch gekennzeichnet,daß**das Ventil zwischen einem am Flaschenboden (43) angeordneten Schraubstutzen (45) und einem damit in Klemm- oder Schraubverbindung befestigten Verschluß (44) ausgebildet ist.

13. Vorrichtung nach einem der Ansprüche 9 bis 12, **dadurch gekennzeichnet, daß** das erste Ventilteil (21, 31) eine Kugel und das dritte Ventilteil (22) eine federelastische Membranplatte ist.

14. Vorrichtung nach einem der Ansprüche 9 bis 13, **dadurch gekennzeichnet,daß** der flaschenseitige Teil (44, 21, 31, 22) des Ventils im wesentlichen die Dichteinrichtung (2) bestimmt und in einem Rezeß im Flaschenboden (43) verdeckt angeordnet ist.

15. Vorrichtung nach Anspruch 9, **dadurch gekennzeichnet,daß** das Ventil (30C) ein unter Kraft einer Feder (35C) die Gaseintrittsöffnung (33C) im Flaschenboden gegen Flüssigkeitsaustritt verschließendes Kugelelement (31C) sowie einen Ventildorn (32C) mit einem darin verlaufenden Gaszufuhrkanal (320C) umfaßt, wobei unter Absenken der Flasche (4) der Dorn das Kugelelement gegen die Federkraft verdrängt.

16. Vorrichtung (1) nach einem des Ansprüche 1 bis 15,
**dadurch gekennzeichnet,daß** das Bedienungselement (7) als auf den Hals (40) der Flasche (4) aufschraubbares, gegen Federkraft (72B) gegen die Flasche bewegbares Betätigungsteil für die Gaseinbleseinrichtung ausgebildet ist.

17. Vorrichtung nach Anspruch 16, **dadurch gekennzeichnet,daß** das Bedienungselement (7) ein darin integriertes, auf vorbestimmten Überdruck öffnungsfähiges Flaschenentlüftungsventil (42B) aufnimmt.

18. Vorrichtung nach Anspruch 16 oder 17, **dadurch gekennzeichnet , daß** das Bedienungselement (7) als oberen Abschluß eine im Gehäuse (10) gleitend geführte Kappe (70B) umfaßt, die in sich die Feder (72B) zur Erzeugung der Rückstellkraft des Betätigungsteils mindestens teilweise und nach außen abgedeckt lagert.

19. Vorrichtung nach einem der Ansprüche 16 bis 18, **dadurch gekennzeichnet, daß** das Bedienungselement (7) als am Flaschenhals (40) dichtend verschraubtes Stempelelement (73B) ausgebildet ist.

20. Vorrichtung nach Anspruch 17, **dadurch gekennzeichnet,daß** das Bedienungselement (7) mit einem Kolbenelement, wie einem Rohrteil (71B), ausgebildet ist, in dessen Wandung (710B) Entlüftungslöcher (711B) für das das Flaschenentlüftungsventil (42B) passierende Gas vorgesehen sind.

21. Vorrichtung nach einem der Ansprüche 16 bis 20, **dadurch gekennzeichnet, daß** das Bedienungselement (7) mit Hilfe von Gestängemitteln (60B) direkt mit dem Gaszufuhranschluß (5) derart verbunden ist, daß die Betätigung der Gaseinblaseinrichtung (3) der Öffnung des Gaszufuhranschlusses (5) vorläuft.

22. Vorrichtung nach Anspruch 21, **dadurch gekennzeichnet,daß** die Gestängemittel (6) einen zwischen Bedienungselement (7) und Gaszufuhranschluß (5) wirksamen, im oberen Teil des Gehäuses (10) und am Bedienungselement (7) gelenkig gelagerten sowie an dem Gaszufuhranschluß (5) angreifenden Schwenkhebel (64B) aufweisen.

23. Vorrichtung nach Anspruch 22, **dadurch gekennzeichnet,daß** der Schwenkhebel (64B) ein das Rohrteil (71B) des Bedienungselements (7) umgreifendes Gabellagerende (641B) und zwischen diesem und seinem anderen Schwenklagerende (642B) Mittel (643B) zum Einwirken auf/Angreifen an einen/in Öffnungsstößel (53) für ein Ventil der Gasflasche (8) aufweist.

24. Vorrichtung nach einem der Ansprüche 21 bis 23, **dadurch gekennzeichnet, daß** im Bereich der Gestängemittel (60B) und des Bedienungselements (7) Sperrmittel (68) angeordnet sind, die auf einem ersten Teilweg des Bedienungselements (7) die Bewegung der Gestängemittel (60B) sperren oder verriegeln und diese erst während eines zweiten Teilwegs nach öffnen der Gaseinblaseinrichtung (3) am Boden der Flasche freigeben.

25. Vorrichtung nach Anspruch 24, **dadurch gekennzeichnet,daß** zum Freigeben der Verriegelungs- oder Sperrposition der Sperrmittel (68) zwischen dem unteren Bereich der Flasche (4) und den Sperrmitteln (68) eine Zugeinrichtung (681) vorgesehen ist.

26. Vorrichtung nach Anspruch 25, **dadurch gekennzeichnet,daß** die Zugeinrichtung (681) ein Seilzug ist.

27. Vorrichtung nach einem der Ansprüche 24 bis 26, **dadurch gekennzeichnet, daß** die Sperrmittel (68) durch die Kraft einer Feder (682) in Sperroder Verriegelungsposition gehalten sind.

28. Vorrichtung nach einem der Ansprüche 24 bis 27,**dadurch gekennzeichnet, daß** die Sperrmittel (68) als Stift (684), Nocken, Nase od.dgl. auf einem translatorisch oder rotatorisch von der Zugeinrichtung/dem Seilzug (681) bewegbaren Träger (683) vorgesehen sind.

29. Vorrichtung nach Anspruch 17, **dadurch gekennzeichnet,daß** das Flaschenentlüftungsund Sicherheitsventil (42D) als doppeltwirkendes Ventil in Form eines gegen die Kraft einer Feder (422D) bewegbaren, im Normalfall dichtend gegen ein Teil des Betätigungsteils anliegenden Ventilkörpers (421D) ausgebildet ist, der eine Durchgangsbohrung (423D) aufweist und in dieser eine gegen die Kraft einer Kugelfeder bewegbare, den Bohrungsaustritt im Normalfall verschließende Ventilkugel (424D) umfaßt.

30. Vorrichtung nach Anspruch 29, **dadurch gekennzeichnet,daß** die öffnungskräfte für Ventilkörper (421D) und Ventilkugel (424D) unterschiedlich und/oder einstellbar sind.

31. Flasche (4) für eine Vorrichtung (1) zum Karbonisieren von in der Flasche (4) enthaltener Flüssigkeit unter Einsetzen in diese Vorrichtung und Verbinden mit einer Karbonisierungsquelle mit Ein- und Austrittsmitteln zum Einfüllen und Ausgießen der Flüssigkeit sowie zum Zuführen von Karbonisiergas, wobei die Ein- und Austrittsmittel als voneinander separate, jeweils verschließbare Einfüll- und Ausgießöffnung (401) im Bereich des Flaschenhalses (40) und Gaseintrittsöffnung (33) vorgesehen sind.

32. Flasche nach Anspruch 31, **dadurch gekennzeichnet, daß** die Gaseintrittsöffnung (33) im Flaschenboden (43) angeordnet und mittels eines Bodenventils (30) betätigbar ist.

33. Flasche nach Anspruch 31 oder 32 zur Verwendung in einer Vorrichtung nach einem der Ansprüche 1 bis 30.

## Claims

1. Device (1) for carbonising a liquid contained in a bottle (4) provided with a closable pouring orifice arranged in the neck area (40) and a gas inlet orifice (33) with
- a sealing device (2) for a sealing connection with the bottle (4),
- a gas injecting device (3), in active connection with the sealing device (2), for injecting gas into the liquid,
- a device for holding the bottle (4) in a predetermined position in which the gas inlet orifice (33) of the bottle (4) is in the area of the sealing device (2) and the gas injecting device (3) is functionally connected to the bottle (4),
- a housing (10), at least partially surrounding the bottle (4) for accommodating at least the bottle (4) in said position,
- an externally accessible operating element (7) for opening the gas injecting device (3),
- a mobile sealing element (21) allocated to the sealing device (2) and
- a gas supply connection (5), which fits on the housing (10) and can be connected to a gas bottle (8) for gas to be injected into the bottle (4),
wherein
- the sealing device (2) and a first gas injecting part (31) of the gas injecting device (3) are components of the base (43) of the bottle (4)
- and a second gas injecting part (32) of the gas injecting device (3) is arranged on the housing (10) for actuating the sealing device (2) in such a way that the first and second gas injecting parts (31, 32) can be moved relative to one another by means of an externally accessible operating element (7) to open the gas inlet.

2. Device according to claim 1, **characterised in that** the first gas injecting part (31) and the second gas injecting part (32) are components of a gas inlet base valve (30) which blocks the passage of liquid in each position of the two gas injecting parts (31, 32).

3. Device according to claim 1 or 2, **characterised in that** the first and the second gas injecting or valve parts (31 or 32) can be moved relative to one another by means of a movement device which is arranged on the housing (10) and has a bearing face (61) forming a seat for the bottle (4) and a bearing element (66) bearing the second gas injecting or valve part (32), wherein the bearing face (61) and the bearing element (66) can be moved relative to one another by spring compliance and when force is exerted by means of the operating element (7) the second gas injecting or valve part (32) of the gas injecting device (3) engages in the allocated gas inlet orifice (33) of the valve (30), provided at the base of the bottle, in such a way that during this engagement by displacing the first gas injecting or valve part (31) in the base (43) of the bottle the orifice (33) to the passage of gas through the base is released.

4. Device according to claim 3, **characterised in that** the bearing element (66) bearing the second gas injecting or valve part (32) is a component of a plinth, fixed to the housing, and the bearing face (61) is provided as a lifting plate acting on the base (43) of the bottle and movably borne on the plinth against the spring compliance, wherein the lifting plate is provided with a through orifice (67) for the passage of the second gas injecting or valve part (32).

5. Device according to one of claims 1 to 4, **characterised in that** the operating element (7) is arranged on the housing (10) above an accommodating space for the bottle (4) and is connected to a piston element (71), with which the bottle (4), inserted into the device (1) and borne by spring compliance, can be lowered against the spring force to open the gas inlet.

6. Device according to one of claims 2 to 5, **characterised in that** the movement device displacing the first and the second gas injecting or valve parts (31, 32) relative to one another is actively connected to a gas connection valve (50), arranged in the housing (10) and provided for the connection (5) of a gas line (51, 52) connected to the first gas injecting or valve part (31) of the base valve (30) for joint actuation with the base valve (30), wherein the active connection is such that the gas connection valve (50) is open in the open position of the base valve (30), whereas it is closed in the gas closed position of the base valve (30).

7. Device according to claim 6, **characterised in that** the gas supply connection (5) is provided in the upper area of the housing (10) and the gas connection valve (50) and the base valve (30) are actively connected by means of an actuation rod (65) in such a way that the lower part of the rod is linked to the movement device, while its upper part acts on a closing part (53) of the gas connection valve (50) via a lever (64).

8. Device (1) according to one of claims 1 to 7, **characterised in that** the gas supply connection (5) comprises a fast coupling (9) for connecting a gas bottle (8) which can be inserted replaceably in the device (1).

9. Device according to one of claims 1 to 8, **characterised in that** the device comprises a valve (30) for introducing gas into the bottle (4), in order to replace liquid contained therein with this gas, wherein at least part of the valve (30) is constructed as a dual-function valve on the base (43) of the bottle (4).

10. Device according to claim 9, **characterised in that** the valve (30) on the one hand blocks the outlet of liquid from the bottle (4) and on the other hand firstly in a first position of a first valve part (21, 31) of a blocking sealing device (2) blocks the gas inlet and secondly in a second position of the first valve part (21, 31) releases the gas inlet into the bottle (4), wherein a second valve part, with which the first valve part (21, 31) can be displaced out of the first position into the second position, is allocated to the valve (30) constructed on the base (43) of the bottle.

11. Device according to claim 9 or 10, **characterised in that** the valve comprises a third valve part (22) arranged on the base (43) of the bottle, which is formed by an elastic element holding the first valve part (21, 31) against elastic restoring force in the first position, wherein the first valve part (21, 31) is held as tensioned against the third valve part (22), while the third valve part (22) is constructed as a diaphragm element permeable to gas.

12. Device according to claim 11, **characterised in that** the valve is constructed between a screw connecting piece (45) arranged on the base (43) of the bottle and a seal (44) fixed thereto in clamping or screw connection.

13. Device according to one of claims 9 to 12, **characterised in that** the first valve part (21, 31) is a ball and the third valve part (22) a spring-elastic diaphragm plate.

14. Device according to one of claims 9 to 13, **characterised in that** the flat-sided part (44, 21, 31, 22) of the valve substantially defines the sealing device (2) and is arranged as covered in a recess in the base (43) of the bottle.

15. Device according to claim 9, **characterised in that** the valve (30C) comprises a ball element (31C) closing the gas inlet orifice (33C) in the base of the bottle against the outlet of liquid under the force of a spring (35C) and also a valve mandrel (32C) with a gas supply duct (320C) running in it, wherein when the bottle (4) is lowered the mandrel displaces the ball element against the force of the spring.

16. Device according to one of claims 1 to 15, **characterised in that** the operating element (7) is constructed as an actuating part for the gas injecting device, which can be screwed on to the neck (40) of the bottle (4) and moved towards the bottle against the force of the spring (72B).

17. Device according to claim 16, **characterised in that** the operating element (7) accommodates a bottle deaerating valve (42B) integrated therein and capable of opening at a predetermined vacuum.

18. Device according to claim 16 or 17, **characterised in that** the operating element (7) comprises as upper seal a cap (70B) guided in the housing (10) as sliding, which bears in it, at least partially and covered towards the outside, the spring (72B) for generating the restoring force of the actuating part.

19. Device according to one of claims 16 to 18, **characterised in that** the operating element (7) is constructed as a die element (73B) screwed to the neck (40) of the bottle so as to seal.

20. Device according to claim 17, **characterised in that** the operating element (7) is constructed with a piston element, such as a pipe part (71B), in the wall (710B) of which aerating holes (711B) are provided for the gas passing through the bottle aerating valve (42B).

21. Device according to one of claims 16 to 20, **characterised in that** the operating element (7) is directly connected to the gas supply connection (5) with the aid of linkage means (60B) in such a way that actuation of the gas injecting device (3) precedes the opening of the gas supply connection (5).

22. Device according to claim 21, **characterised in that** the linkage means (6) have a swivel lever (64B) effective between operating element (7) and gas supply connection (5) and borne articulatedly in the upper part of the housing (10) and on the operating element (7) and also acting on the gas supply connection (5).

23. Device according to claim 22, **characterised in that** the swivel lever (64B) has a forked bearing end (641B) surrounding the pipe part (71B) of the operating element (7) and between this and its other swivel bearing end (642B) means (643B) for influencing/acting on an opening tappet (53) for a valve of the gas bottle (8).

24. Device according to one of claims 21 to 23, **characterised in that** in the area of the linkage means (60B) and the operating element (7) blocking means (68) are arranged, which on a first partial path of the operating element (7) block or lock the movement of the linkage means (60B) and release them only during a second partial path after the gas injecting device (3) has been opened at the base of the bottle.

25. Device according to claim 24, **characterised in that** to release the locking or blocking position of the blocking means (68) a pulley device (681) is provided between the lower area of the bottle (4) and the blocking means (681).

26. Device according to claim 25, **characterised in that** the pulley device (681) is a cable pulley.

27. Device according to one of claims 24 to 26, **characterised in that** the blocking means (68) are held in the blocking or locking position by the force of a spring (682).

28. Device according to one of claims 24 to 27, **characterised in that** the blocking means (68) are provided as a pin (684), cam, projection or suchlike on a carrier (683) which can be moved translatorily or rotationally by the pulley device/cable pulley (681).

29. Device according to claim 17, **characterised in that** the bottle aerating and safety valve (42D) is constructed as a dual-action valve in the form of a valve body (421D) movable against the force of a spring (422D), normally resting so as to seal against a part of the actuating part and having a through hole (423D) and in this comprising a valve ball (424D) movable against the force of a ball spring, closing the outlet of the hole in normal cases.

30. Device according to claim 29, **characterised in that** the opening forces for the valve body (421D) and the valve ball (424D) are different and/or adjustable.

31. Bottle (4) for a device (1) for carbonising liquid contained in the bottle (4) by inserting it into this device and connecting it to a carbonising source with inlet and outlet means for filling and pouring the liquid and also for supplying carbonising gas, wherein the inlet and outlet means are provided as filling and pouring orifices (401), separate from one another and closable in each case, in the area of the neck (40) of the bottle and gas inlet orifice (33).

32. Bottle (4) according to claim 31, **characterised in that** the gas inlet orifice (33) is arranged in the base (43) of the bottle and is actuatable by means of a base valve (30).

33. Bottle (4) according to claim 31 or 32 for use in a device according to one of claims 1 to 30.

## Revendications

1. Appareil (1) de carbonisation de liquide contenu dans une bouteille (4) dotée d'une ouverture de versement, qui peut être fermée et qui est agencée au niveau du col (40), et d'une ouverture d'entrée de gaz (33), lequel appareil comprend
- un dispositif d'étanchéité (2) destiné à réaliser une liaison étanche avec la bouteille (4),
- un dispositif d'injection de gaz (3) qui est en liaison active avec le dispositif d'étanchéité (2) et qui est destiné à injecter du gaz dans le liquide,
- un dispositif destiné à maintenir la bouteille (4) dans une position prédéterminée dans laquelle l'ouverture d'entrée de gaz (33) de la bouteille (4) se trouve au niveau du dispositif d'étanchéité (2) et l'entrée d'injection de gaz (3) est fonctionnement reliée à la bouteille (4),
- un boîtier (10) qui entoure au moins partiellement la bouteille (4) et qui est destiné à recevoir au moins la bouteille (4) dans ladite position,
- un élément de commande (7) qui est accessible de l'extérieur et qui est destiné à ouvrir le dispositif d'injection de gaz (3),
- un élément d'étanchéité (21) mobile qui est associé au dispositif d'étanchéité (2) et
- un raccord d'amenée de gaz (5) qui est monté sur le boîtier (10), qui peut être raccordé à une bouteille de gaz (8) et qui est destiné au gaz à insuffler dans la bouteille (4),
où
- le dispositif d'étanchéité (2) et une première pièce d'injection de gaz (31) du dispositif d'injection de gaz (3) font partie du fond (43) de la bouteille (4),
- et une deuxième pièce d'injection de gaz (32) du dispositif d'injection de gaz (3) qui est destinée à actionner le dispositif d'étanchéité (2) est agencée au niveau du boîtier (10) de telle sorte que les première et deuxième pièces d'injection de gaz (31, 32) sont mobiles l'une par rapport à l'autre au moyen d'un élément d'actionnement (7) accessible de l'extérieur afin d'ouvrir l'entrée de gaz.

2. Appareil selon la revendication 1, **caractérisé en ce que** la première pièce d'injection de gaz (31) et la deuxième pièce d'injection de gaz (32) font partie d'un clapet de fond d'entrée de gaz (30) qui bloque l'entrée de liquide dans chaque position des deux pièces d'injection de gaz (31, 32).

3. Appareil selon la revendication 1 ou 2, **caractérisé en ce que** les première et deuxième pièces d'injection de gaz ou de clapet (31 ou 32) sont mobiles l'une par rapport à l'autre au moyen d'un dispositif de déplacement qui est agencé au niveau du boîtier (10) et qui comporte une surface portante (61) formant un siège pour la bouteille (4) et un élément de support (66) supportant la deuxième pièce d'injection de gaz ou de clapet (32), la surface portante (61) et l'élément de support (66) étant mobiles l'un par rapport à l'autre grâce à l'élasticité d'un ressort et, lorsqu'une force est exercée au moyen de l'élément de commande (7), la deuxième pièce d'injection de gaz ou de clapet (32) du dispositif d'injection de gaz (3) s'engage dans l'ouverture d'entrée de gaz (33) associée du clapet (30), qui est prévue au fond de la bouteille, de sorte que l'ouverture (33) est libérée pendant cet engagement en déplaçant la première pièce d'injection de gaz ou de clapet (31) en vue de laisser passer le gaz à travers le fond (43).

4. Appareil selon la revendication 3, **caractérisé en ce que** l'élément de support (66) supportant la deuxième pièce d'injection de gaz ou de clapet (32) fait partie d'une embrase fixe par rapport au boîtier et la surface porteuse (61) se présente sous la forme d'une plaque de levage qui s'engage avec le fond de la bouteille (43) et qui est montée de façon mobile sur l'embase en s'opposant à l'élasticité d'un ressort, la plaque de levage étant dotée d'une ouverture de passage (67) destinée à laisser passer la deuxième pièce d'injection de gaz ou de clapet (32).

5. Appareil selon l'une des revendications 1 à 4, **caractérisé en ce que** l'élément de commande (7) est agencé sur le boîtier (10) via un espace de réception destiné à la bouteille (4) et est relié à un élément de piston (71) au moyen duquel la bouteille (4) qui est insérée dans l'appareil (1) et qui est montée élastiquement peut être abaissée en s'opposant à la force du ressort en vue d'ouvrir l'entrée de gaz.

6. Appareil selon l'une des revendications 2 à 5, **caractérisé en ce que** le dispositif de déplacement, qui déplace les première et deuxième pièces d'injection de gaz ou de clapet (31, 32) l'une par rapport à l'autre, est relié activement en vue de l'actionnement conjoint avec le clapet de fond (30) à un clapet de raccordement de gaz (50) qui est agencé dans le boîtier (10) et qui est destiné au raccord (5) d'une conduite de gaz (51, 52) raccordée à la première pièce d'injection de gaz ou de clapet (31) du clapet de fond (30), la liaison active étant telle que le clapet de raccordement de gaz (50) est ouvert lorsque le clapet de fond (30) est dans la position ouverte, tandis qu' il est fermé lorsque le clapet de fond (30) est dans la position fermée.

7. Appareil selon la revendication 6, **caractérisé en ce que** le raccord d'amenée de gaz (5) est prévu dans la région supérieure du boîtier (10) et **en ce que** le clapet de raccordement de gaz (50) et le clapet de fond (30) sont reliés activement au moyen d'une barre d'actionnement (65) de telle sorte que la partie inférieure de la barre est articulée sur le dispositif de déplacement, tandis que sa partie supérieure agit via un levier (64) sur une pièce de fermeture (53) du clapet de raccordement de gaz (50).

8. Appareil (1) selon l'une des revendications 1 à 7, **caractérisé en ce que** le raccord d'amenée de gaz (5) comporte un couplage rapide (9) destiné à raccorder une bouteille de gaz (8) pouvant est insérée de façon amovible dans l'appareil (1).

9. Appareil (1) selon l'une des revendications 1 à 8, **caractérisé en ce que** l'appareil comporte un clapet (30) destiné à introduire du gaz dans la bouteille (4) en vue de déplacer au moyen de ce gaz le liquide remplissant ladite bouteille, au moins une partie du clapet (30) au fond (43) de la bouteille (4) est conformée en clapet à double fonction.

10. Appareil selon la revendication 9, **caractérisé en ce que** le clapet (30) bloque d'une part la sortie de liquide de la bouteille (4) et d'autre part l'entrée de gaz d'un côté dans une première position d'une première pièce de clapet (21, 31) d'un dispositif d'étanchéité bloquant (2) et libère d'un autre côté dans une deuxième position de la première pièce de clapet (21, 31) l'entrée de gaz dans la bouteille (4), le clapet (30) conformé au fond (43) de la bouteille étant associé à une deuxième pièce de clapet (32) au moyen de laquelle la première pièce de clapet (21, 31) et déplaçable de la première position dans la deuxième position.

11. Appareil selon la revendication 9 ou 10, **caractérisé en ce que** le clapet comporte une troisième pièce de clapet (22) qui est agencée au fond (43) de la bouteille et qui est formée par un élément élastique qui maintient la première pièce de clapet (21, 31) dans la première position en s'opposant à une force de rappel élastique, la première pièce de clapet (21, 31) étant maintenue serrée contre la troisième pièce de clapet (22) tandis que la troisième partie de clapet (22) est conformée en élément à membrane perméable au gaz.

12. Appareil selon la revendication 11, **caractérisé en ce que** le clapet est conformé entre un manchon fileté (45) agencé au fonds (43) de la bouteille et une fermeture (44) fixée audit manchon dans une liaison par serrage ou vissage.

13. Appareil selon l'une des revendications 9 à 12, **caractérisé en ce que** la première pièce de clapet (21, 31) est une bille et la troisième pièce de clapet (22) est une plaque à membrane élastique.

14. Appareil selon l'une des revendications 9 à 13, **caractérisé en ce que** la pièce (44, 21, 31, 22) du clapet, qui se trouve du côté de la bouteille, définit sensiblement le dispositif d'étanchéité (2) et est agencé en étant à recouvert dans un évidement ménagé dans le fond (43) de la bouteille.

15. Appareil selon la revendication 9, **caractérisé en ce que** le clapet (30C) comporte un élément sphérique (31C) fermant sous l'action d'une force exercée par un ressort (35C) l'ouverture d'entrée de gaz (33) ménagée dans le fond de la bouteille et s'opposant à la sortie de liquide ainsi qu'une aiguille de clapet (32C) dans laquelle est ménagée un canal d'amenée de gaz (320C), l'aiguille déplaçant l'élément sphérique en s'opposant à la force du ressort lorsque la bouteille (4) est abaissée.

16. Appareil (1) selon l'une des revendications 1 à 15, **caractérisé en ce que** l'élément de commande (7) est conformé en pièce d'actionnement du dispositif d'injection de gaz, laquelle pièce d'actionnement peut être vissée sur le col (40) de la bouteille (14) et est mobile contre la bouteille en s'opposant à la force du ressort (72B).

17. Appareil selon la revendication 16, **caractérisé en ce que** l'élément de commande (7) reçoit un clapet de purge de bouteille (42B) qui est intégré dans ledit élément de commande et qui est apte à s'ouvrir à une surpression prédéterminée.

18. Appareil selon la revendication 16 ou 17, **caractérisé en ce que** l'élément de commande (7) comporte comme raccord supérieur un capuchon (70B) qui est guidé à coulissement dans le boîtier (10) et dans lequel le ressort (72B) est logé en étant découvert au moins partiellement vers l'extérieur en vue de générer la force de rappel de la pièce d'actionnement.

19. Appareil selon l'une des revendications 16 à 18, **caractérisé en ce que** l'élément de commande (7) est conformé en élément formant poinçon (73B) vissé de façon étanche sur le col (40) de la bouteille.

20. Appareil selon la revendication 17, **caractérisé en ce que** l'élément de commande (7) est conformé avec un élément de piston, tel qu'une pièce tubulaire (71B), dans la paroi (710B) duquel sont ménagés des trous de purge (711B) destiné au gaz passant par le clapet de purge de bouteille (42B).

21. Appareil selon l'une des revendications 16 à 20, **caractérisé en ce que** l'élément de commande (7) est raccordé à l'aide de moyens formant tringles (60B) directement au raccord d'amenée de gaz (5), et **en ce que** l'actionnement du dispositif d'injection de gaz (3) procède à l'ouverture du raccord d'amenée de gaz (5).

22. Appareil selon la revendication 21, **caractérisé en ce que** les moyens formant tringles (6) comportent un levier pivotant (64B) qui est actif entre l'élément de commande (7) et le raccord d'amenée de gaz (5), qui est monté dans la partie supérieure du boîtier (10) en étant articulé sur l'élément de commande (7) et qui s'engage sur le raccord d'amenée de gaz (5).

23. Appareil selon la revendication 22, **caractérisé en ce que** le levier pivotant (64B) comporte une extrémité de montage fourchue (641B) entourant la partie tubulaire (71B) de l'élément de commande (7) et, entre cette extrémité et son autre extrémité pivotante (642B), des moyens (643B) d'action sur un coulisseau d'ouverture (53), ou d'engagement avec celui-ci, destiné à un clapet de la bouteille de gaz (8).

24. Appareil selon l'une des revendications 21 à 23, **caractérisé en ce qu'**il est agencé au niveau des moyens formant tringles (60B) et de l'élément de commande (7) des moyens de blocage (68) qui bloquent ou verrouillent sur une première section de trajectoire de l'élément de commande (7) le mouvement des moyens formant tringles (60B) et ne libèrent celui-ci que sur une deuxième section de trajet après ouverture du dispositif d'injection de gaz (3) au fond de la bouteille.

25. Appareil selon la revendication 24, **caractérisé en ce qu'**un dispositif de traction (681) est prévu entre la région inférieure de la bouteille (4) et les moyens de blocage (68) afin de libérer la position de verrouillage ou de blocage des moyens de blocage (68).

26. Appareil selon la revendication 25, **caractérisé** le dispositif de traction (681) est un câble de traction.

27. Appareil selon l'une des revendications 24 à 26, **caractérisé** les moyens de blocage (68) sont maintenus en position de blocage ou de verrouillage par la force exercée par un ressort (682).

28. Appareil selon l'une des revendications 24 à 27, **caractérisé en ce que** les moyens de blocage (68) se présentent sous forme d'une cheville (684), d'un taquet, d'un ergot ou analogue sur un support (683) déplaçable en translation ou en rotation au moyen du dispositif de traction ou du câble de traction (681).

29. Appareil selon la revendication 17, **caractérisé en ce que** le clapet de purge de bouteille et de sécurité (42D) est conformé en clapet à double action se présentant sous la forme d'un corps de clapet (421D) qui est mobile en s'opposant à la force exercée par un ressort (422D) et qui porte dans le cas normal de façon étanche contre une partie de la pièce d'actionnement, ledit corps de clapet comportant un alésage traversant (423D) et une bille de clapet (424D) qui est mobile dans ledit alésage traversant en s'opposant à la force exercée par un ressort à bille et qui ferme dans le cas normal la sortie d'alésage.

30. Appareil selon revendication 29, **caractérisé en ce que** les forces d'ouverture destinées au corps de clapet (421D) et à la bille de clapet (424D) sont différentes et/ou sont réglables.

31. Bouteille (4) destinée à un dispositif (1) de carbonisation de liquide contenu dans la bouteille (4), ladite bouteille étant insérée dans ce dispositif et étant reliée à une source de carbonisation via des moyens d'entrée et de sortie destinés à remplir et déverser le liquide ainsi qu'à amener du gaz de carbonisation, et les moyens d'entrée et de sortie se présentant respectivement sous la forme d'une ouverture de remplissage et de déversement (401) au niveau du col (40) de la bouteille et d'une ouverture d'entrée de gaz (33) qui sont séparées l'une de l'autre et qui peuvent être fermées.

32. Bouteille selon la revendication 31, **caractérisée en ce que** l'ouverture d'entrée de gaz (33) est ménagée dans le fond (43) de la bouteille et est actionnable au moyen d'un clapet de fond (30).

33. Bouteille selon la revendication 31 ou 32 destinée à être utilisée dans un appareil selon l'une des revendications 1 à 30.
